# EUROPÄISCHE PATENTSCHRIFT

(11) **EP 1 916 463 B1**
(45) Veröffentlichungstag und Bekanntmachung des Hinweises auf die Patenterteilung: **30.04.2014**
(21) Anmeldenummer: 07118262.0
(22) Anmeldetag: 11.10.2007
(51) Int. Cl.: F16L 3/10

(54) **Rohrschelle**
Pipe clip
Collier de tuyau

(30) Priorität: 23.10.2006 DE 102006035368
(43) Veröffentlichungstag der Anmeldung: 30.04.2008
(73) Patentinhaber: HILTI Aktiengesellschaft, 9494 Schaan (LI)
(72) Erfinder: Birnbaum, Ulrich, 86899, Epfenhausen (DE); Rubio, Daniel, 28007, Madrid (ES); Mundwiler, Lukas, 4434, Hoelstein (CH)
(74) Vertreter: Wildi, Roland

(56) Entgegenhaltungen:
- EP-A1- 0 193 087
- DE-U1- 9 206 705
- US-A- 3 594 706

## Beschreibung

Die Erfindung betrifft eine Rohrschelle mit Schellenbügeln, die an Endbereichen miteinander verbindbar sind, wobei zumindest ein Schellenbügel eine Krümmung, einen ersten, krümmungsseitig innenliegenden Wandabschnitt, einen dem ersten Wandabschnitt gegenüberliegenden zweiten Wandabschnitt sowie einen die Wandabschnitte verbindenden Verbindungsabschnitt aufweist, wobei der zweite Wandabschnitt entlang des gesamten Verlaufs des Schellenbügels unter Ausbildung eines Innenhohlraums in einem Abstand zu dem ersten Wandabschnitt angeordnet ist.

Rohrschellen der gattungsgemässen Art werden für Installation von Leitungen und insbesondere von Rohren verwendet, die entlang von Wänden geführt oder von Decken abgehängt werden.

Aus der EP 0 643 247 A1 ist eine Rohrschelle mit zwei Schellenbügeln bekannt, die an Endbereichen miteinander verbindbar sind. Die Schellenbügel dieser Rohrschelle sind aus einem Flachmaterial gefertigt, dass zur Versteifung der Schellenbügel mit einer Sicke versehen ist.

Nachteilig an den bekannten Lösungen ist, dass solche Schellenbügel, insbesondere für Rohrschellen zur Befestigung von Leitungen mit grossen Durchmessern, wie z. B. von Wickelfalzrohren mit Nenndurchmessern von beispielsweise 50 cm oder mehr, eine geringe Steifigkeit aufweisen. Somit müssen die Schellenbügel dieser Rohrschellen sehr massiv ausgebildet werden. Wird auf eine massive Ausgestaltung der Schellenbügel verzichtet und werden diese einzig bezüglich der erforderlichen Haltewerte ausgebildet, neigen solche Schellenbügel aufgrund ihrer geringen Steifigkeit zum Verwinden, was die Montage der Leitungen massgeblich erschwert. Zudem könnte bei einem Anwender trotz dem Erreichen der erforderlichen Haltewerte der Eindruck entstehen, dass diese Rohrschelle die Befestigung der Leitung nicht sicherstellt.

Aus der DE 92 06 705 U1 ist eine Auflager-Rohrschelle mit einem ersten, eine Krümmung aufweisenden Schellenbügel bekannt, der aus einem umfänglich geschlossenen Hohlprofil gefertigt ist. Der erste Schellenbügel weist einen ersten, krümmungsseitig innenliegenden Wandabschnitt, einen dem ersten Wandabschnitt gegenüberliegenden zweiten Wandabschnitt sowie die Wandabschnitte verbindende Verbindungsabschnitte auf. Mit Ausnahme der tangential angeordneten Enden ist das Hohlprofil mit einem ursprünglich runden Querschnitt flachgedrückt, so dass im Bereich des Bogens die einander gegenüberliegenden Wandabschnitte flächig aufeinanderliegen. Die hülsenförmigen Enden sind für ein einfaches Verbinden des ersten Schellenbügels mit einem zweiten Schellenbügel, der einen Auflagerschellenabschnitt auf einer Konsole aufweist, jeweils mit einem Innengewinde versehen, in das durch den zweiten Schellenbügel hindurchgeführte Spannschrauben zum Verspannen der Rohrschelle eingreifen. Mit den hülsenförmigen Enden erfolgt eine zentrische Einleitung der Kräfte.

Nachteilig an der bekannten Lösung ist, dass der Schellenbügel aus dem flach gedrückten Hohlprofil ebenfalls zum Verwinden neigt. Infolge der flach aufeinanderliegenden Wandabschnitte lässt sich trotz der Verwendung eines Hohlprofils nur eine geringere Erhöhung der Steifigkeit gegenüber einer Rohrschelle aus einem Flachmaterial erreichen.

Aus der US 3,594,706 A ist eine gattungsgemässe Schelle bekannt, die aus einem Rohrstück gebildet ist.

Aufgabe der Erfindung ist es, eine miteinander verbindbare Schellenbügel aufweisende Rohrschelle insbesondere für abgehängte Leitungen mit grossen Durchmessern zu schaffen, die ein vorteilhaftes statisches Verhalten und dabei mit einem verhältnismässig geringen Materialverbrauch herstellbar ist.

Die Aufgabe ist durch die Merkmale des unabhängigen Anspruchs gelöst. Vorteilhafte Weiterbildungen sind in den Unteransprüchen dargelegt.

Die Erfindung zeichnet sich dadurch aus, dass die Höhe des Innenhohlraums am Scheitelpunkt der Krümmung am grössten ist, und/oder dass an zumindest einem der Schellenbügel ein Befestigungsmittel am Scheitelpunkt einer Krümmung des Schellenbügels vorgesehen ist.

Gemäss der Erfindung ist der zweite Wandabschnitt entlang des gesamten Verlaufs des Schellenbügels unter Ausbildung eines Innenhohlraums in einem Abstand zu dem ersten Wandabschnitt angeordnet.

Die Wandabschnitte sind beispielsweise Teile eines Profils, das als Halbfabrikat der Herstellung des zumindest einen Schellenbügels dient. Die Wandabschnitte bilden beispielsweise eine U-förmige, C-förmige oder I-förmige Ausgestaltung aus. Ein solcher Schellenbügel weist eine hohe Steifigkeit auch bei Rohrschellen für grosse Leitungsdurchmesser auf, wodurch die Montage der Rohrschelle und die Fixierung der Leitung massgeblich vereinfacht sind.

Unter einem eine Krümmung aufweisenden Schellenbügel wird in diesem Zusammenhang ein Schellenbügel verstanden, der einen gebogenen Abschnitt, z. B. für eine bereichsweise Anlage des Schellenbügels an einer beispielsweise rohrförmigen Leitung, oder eine Abwinklung aufweist, z. B. bei einer Rohrschelle für rechteckige Leitungskanäle.

Vorteilhaft umfasst die Rohrschelle zwei Schellenbügel, die beide jeweils einen zweiten, dem ersten, krümmungsseitig innenliegenden Wandabschnitt gegenüberliegend und in einem Abstand zu diesem angeordneten Wandabschnitt aufweisen. Im montierten Zustand umfassen die Schellenbügel die zu fixierende Leitung und sind mittels Verbindungsmittel und/oder Gelenke miteinander verbindbar.

Vorzugsweise ist zumindest ein Schellenbügel aus einem umfänglich geschlossenen, den Innenhohlraum ausbildenden Hohlprofil gefertigt. Ein derartiges Hohlprofil weist gegenüber einem Flachmaterial bei gleichem sowie teilweise geringerem Materialanteil eine grössere Steifigkeit auf. So ist es möglich, Hohlprofile mit geringen Wandstärken zu verwenden, die trotz der grossen Steifigkeit ein verhältnismässig geringes Laufmetergewicht aufweisen. Die Schellenbügel neigen auch bei Rohrschellen für grosse Leitungsdurchmesser nicht mehr zum Verwinden, was die Montage erheblich vereinfacht. Über das Hohlprofil lassen sich die auftretenden Kräfte einfach ableiten. Das Hohlprofil weist als Halbfabrikat beispielsweise einen runden, ovalen oder polygonalen Querschnitt auf.

Erfindungsgemäss weist der Innenhohlraum entlang des Verlaufs des Schellenbügels unterschiedliche Höhen auf. Die Höhe des Innenhohlraums entlang des Verlaufs des Schellenbügels ist an die statischen Erfordernisse beziehungsweise gewünschten Eigenschaften z. B. durch Veränderung der Querschnittsform des von den Wandabschnitten gebildeten Profils angepasst. Zudem können die Wandabschnitte entlang des Verlaufs des Schellenbügels unterschiedliche Wandstärken aufweisen, um die statischen Erfordernisse beziehungsweise gewünschten Eigenschaften des Schellenbügels zu erreichen.

Erfindungsgemäss ist die Höhe des Innenhohlraums am Scheitelpunkt der Krümmung am grössten. Dadurch können die in diesem Bereich auftretenden Biegebeanspruchungen in vorteilhafter Weise aufgenommen werden und ein vorteilhaftes Tragverhalten des Schellenbügels sowie der Rohrschelle ist gewährleistet.

Bevorzugt weist zumindest ein Schellenbügel nach aussen ragende Flansche auf, wobei die Flansche die Endbereiche des Schellenbügels ausbilden. Vorteilhaft liegen die einander gegenüberliegenden Wandabschnitte im Bereich der Flansche bereichsweise flächig aneinander an und die Randbereiche werden winklig zur krümmungsseitig aussenliegenden Seite gebogen, so dass die Flansche einen im Wesentlichen U-förmigen Querschnitt aufweisen. In den Randbereichen sind zwei aussenliegende Innenhohlräume ausgebildet. Infolge dieser Ausbildung der Flansche kann die in diesem auftretende Biegebeanspruchung in vorteilhafter Weise aufgenommen werden. Gleichzeitig bieten die aneinander liegenden Wandabschnitte eines Schellenbügels ausreichend Material z. B. für ein Innengewinde, so dass ein ausreichender Eingriff einer Spannschraube in nur einem Flansch gewährleistet ist. Bei einer Rohrschelle mit zumindest zwei Scheilenbügeln weist vorteilhaft jeder dieser Schellenbügel Flansche auf, wobei beispielsweise ein Schellenbügel in seinem Flansch nur eine Durchführöffnung und der andere Schellenbügel an seinem dem anderen Flansch zugewandten Flansch das Innengewinde als Angriffsmittel aufweist. Besonders vorteilhaft weist in dieser Ausführungsform ein Schellenbügel der Rohrschelle an seinen beiden Flanschen jeweils ein Innengewinde für eine Spannschraube und der andere Schellenbügel der Rohrschelle an seinen beiden Flanschen jeweils Durchführöffnungen für die Spannschraube auf. Alternativ sind in allen Flanschen lediglich Durchführöffnungen für Spannmittel vorgesehen, die beispielsweise eine Schraube mit einer Mutter oder einen Gewindestangenabschnitt mit zwei Muttern umfassen.

Erfindungsgemäss ist ein Befestigungsmittel an zumindest einem der Schellenbügel vorgesehen, das die Festlegung der Rohrschelle an einer Wand beziehungsweise die Abhängung der Rohrschelle von einer Decke ermöglicht. Das Befestigungselement ist beispielsweise eine Mutter, die an dem äusseren Umfang des Schellenbügels z. B. schweisstechnisch festgelegt ist und in die eine Gewindestange einschraubbar ist.

Erfindungsgemäss ist das Befestigungsmittel am Scheitelpunkt einer Krümmung eines Schellenbügels vorgesehen, wodurch die Verbindungsmittel zum Verbinden der Schellenbügel auch im festgelegten Zustand der Rohrschelle einfach von vorne beziehungsweise von unten zugänglich sind.

Vorzugsweise ist das Befestigungsmittel ein Gewindedurchzug, der direkt an dem Schellenbügel ausgebildet ist. Gewindedurchzüge sind einfach zu fertigen und weisen für die üblicherweise bei der Festlegung der Rohrschelle auftretenden Kräfte ausreichende Haltewerte auf. Mit einem Gewindedurchzug muss für die Befestigung der Rohrschelle an einem Untergrund nicht ein separates Bauteil als Anschlusskopf an einem der Schellenbügel festgelegt werden. Vorteilhaft ist der Gewindedurchzug an dem zweiten Wandabschnitt ausgebildet und erstreckt sich in Richtung des ersten, krümmungsseitig innenliegenden Wandabschnitts, so dass das Befestigungsmittel in dem Schellenbügel integriert ist und nicht über die Aussenseite des Schellenbügels vorsteht. Damit kann die Rohrschelle nah und bei Bedarf sogar bündig am Untergrund, z. B. an der Decke, angeordnet werden.

Bevorzugt umfasst das Befestigungsmittel zwei Gewindedurchzüge, die jeweils an den zwei einander gegenüberliegenden Wandabschnitten ausgebildet sind und auf einer gemeinsamen Achse liegen, wobei der eine Gewindedurchzug ein grösseres Innengewinde als der andere Gewindedurchzug aufweist. Die Gewindedurchzüge bilden ein Stufengewinde aus, in das bedarfsweise Befestigungselemente mit zwei unterschiedlich grossen Aussengewinden festlegbar sind. Vorteilhaft sind der Gewindedurchzug mit dem grösseren Innengewinde am zweiten, krümmungsseitig aussenliegenden Wandabschnitt des Schellenbügels und der Gewindedurchzug mit dem kleineren Innengewinde am ersten, krümmungsseitig innenliegenden Wandabschnitt des Schellenbügels angeordnet.

Vorteilhaft sind die freien Enden der Gewindedurchzüge einander zugewandt und ragen in den von den Wandabschnitten umschlossenen Innenhohlraum. Die Gewindedurchzüge sind einfach in einem Stanzverfahren zu fertigen und stehen nicht über den Aussenumfang des Schellenbügels vor, was eine oberflächennahe Befestigung der Rohrschelle an einem Untergrund ermöglicht.

Die Erfindung wird nachstehend anhand zweier Ausführungsbeispiele näher erläutert. Es zeigen:
- Fig. 1: Eine Seitenansicht auf eine erfindungsgemässe Rohrschelle;
- Fig. 2: einen Schnitt durch einen Schellenbügel entlang der Linie II-II in Fig. 1;
- Fig. 3: einen Schnitt durch den Schellenbügel entlang der Linie III-III in Fig. 1;
- Fig. 4: einen Schnitt durch den Schellenbügel entlang der Linie IV-IV in Fig. 1; und
- Fig. 5: einen Schnitt durch einen Schellenbügel eines zweiten Ausführungsbeispiels analog Fig. 2.

Grundsätzlich sind in den Figuren gleiche Teile mit den gleichen Bezugszeichen versehen.

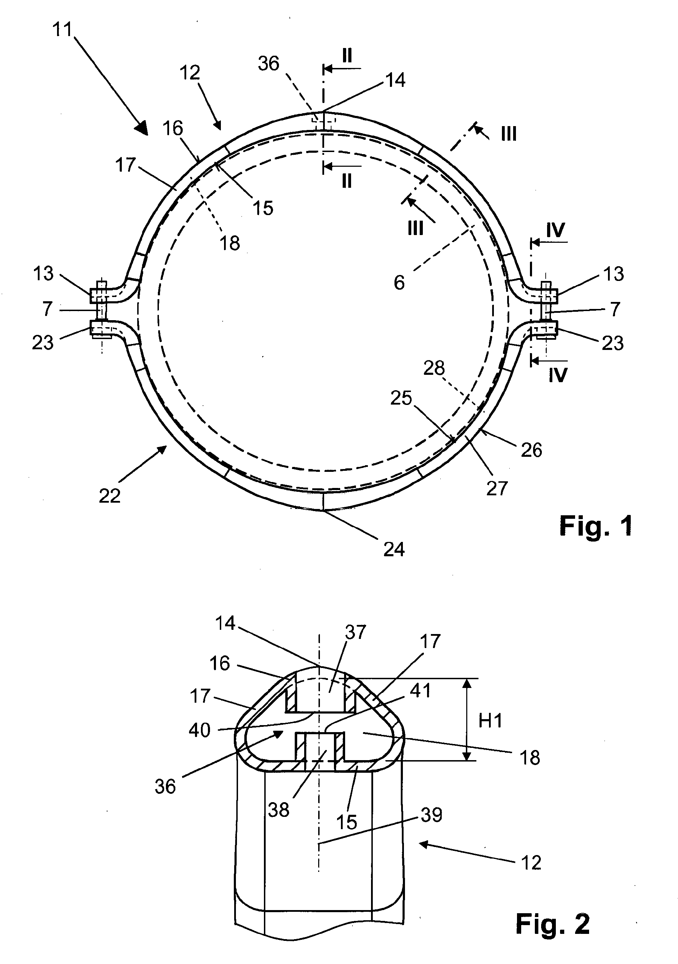

Die in den Figuren 1 bis 4 dargestellte Rohrschelle 11 weist zwei Schellenbügel 12 und 22 auf. Der Schellenbügel 12 weist eine Krümmung in Form eines annähernd halbkreisförmig gebogenen Abschnitts, einen ersten, krümmungsseitig innenliegenden Wandabschnitt 15, einen dem ersten Wandabschnitt 15 gegenüberliegenden zweiten Wandabschnitt 16 sowie die Wandabschnitte 15 und 16 verbindende Verbindungsabschnitte 17 auf. Der erste Wandabschnitt 15 kommt im montierten Zustand der Rohrschelle mit dem zu fixierenden Rohr 6 in Anlage. Der zweite Wandabschnitt 16 ist entlang des gesamten Verlaufs des Schellenbügels 12 unter Ausbildung eines Innenhohlraums 18 in einem Abstand zu dem ersten Wandabschnitt 15 angeordnet. Der Schellenbügel 22 weist ebenfalls eine Krümmung in Form eines annähernd halbkreisförmig gebogenen Abschnitts, einen ersten, krümmungsseitig innenliegenden Wandabschnitt 25, der im montierten Zustand ebenfalls einen Anlageabschnitt zur Anlage an dem zu fixierenden Rohr 6 bildet, einen dem ersten Wandabschnitt 15 gegenüberliegenden zweiten Wandabschnitt 16, der unter Ausbildung eines Innenhohlraums 18 entlang des gesamten Verlaufs des Schellenbügels 22 in einem Abstand zu dem ersten Wandabschnitt 25 angeordnet ist, sowie die Wandabschnitte 25 und 26 verbindende Verbindungsabschnitte 27 auf.

Beide Schellenbügel 12 und 22 sind aus einem umfänglich geschlossenen, den Innenhohlraum 18 bzw. 28 ausbildenden ursprünglich ovalen Hohlprofil als Halbfabrikat gefertigt. Der Innenhohlraum 18 bzw. 28 weist entlang des Verlaufs des Schellenbügels 12 bzw. 22 unterschiedliche Höhen H1 und H2 auf. Die Hohlprofile sind an die Anforderungen durch Umformung angepasst. Bei beiden Schellenbügel 12 und 22 ist die Höhe H1 des Innenhohlraums 18 bzw. 28 am Scheitelpunkt 14 bzw. 24 der Krümmung am grössten.

Die Schellenbügel 12 und 22 weisen zudem radial nach aussen ragende Flansche 13 bzw. 23 als Endbereiche auf. Die Flansche 13 weisen jeweils eine Öffnung mit einem Innengewinde für Spannschrauben 7 und die Flansche 23 weisen jeweils eine Durchführöffnung für die Spannschrauben 7 auf, so dass die Schellenbügel 12 und 22 über die Flansche 13 und 23 zur Abhängung eines Rohres 6 miteinander verbindbar sind. Im Bereich der Flansche 13 und 23 liegt der zweite Wandabschnitt 16 bzw. 26 bereichsweise an dem ersten Wandabschnitt 15 an. Die im Querschnitt seitlichen Ränder 19 sind zur krümmungsseitig aussenliegenden Seite hin weggebogen, so dass die Flansche 13 und 23 in diesem Bereich einen im Wesentlichen U-förmigen Querschnitt aufweisen. In den seitlichen Rändern 19 weisen die von den Wandabschnitten 15, 16 und 17 bzw. 25, 26 und 27 geschaffenen Hohlräume 18 bzw. 28 eine grössere Erstreckung auf.

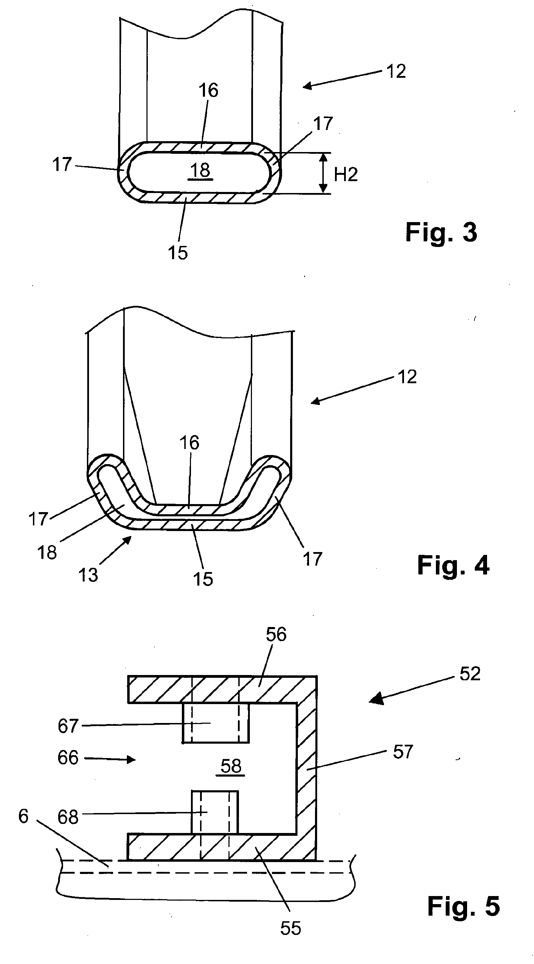

Wie insbesondere in der Fig. 3 dargestellt, weist der Innenraum 18 des Schellenbügels 12 wie auch der Innenraum 28 des Schellenbügels 22 zwischen dem Scheitelpunkt 14 bzw. 24 und den Flanschen 13 bzw. 23 eine Höhe H2 auf, die kleiner als die Höhe H1 des Hohlprofils am Scheitelpunkt 14 bzw. 24 des gebogenen Abschnitts beziehungsweise der Krümmung des Schellenbügels 12 bzw. 22 ist. Der Querschnitt des Hohlprofils ist in diesem Bereich für eine möglichst grosse flächige Anlage des ersten, krümmungsseitig innenliegenden Wandabschnitts 15 bzw. 25 des Schellenbügels 12 bzw. 22 an dem festzulegenden Rohr 6 verformt, so dass in diesem Bereich nur geringe Flächenpressungen auf das Rohr 6 einwirken.

Am Scheitelpunkt 14 der Krümmung des Schellenbügels 12 sind als Befestigungsmittel 36 zwei Gewindedurchzüge 37 und 38 vorgesehen. Die Gewindedurchzüge 37 und 38 liegen auf einer gemeinsamen Achse 39 und deren freie Enden 40 und 41 sind einander zugewandt. Der am zweiten, krümmungsseitig aussenliegenden Wandabschnitt 16 des Schellenbügels 12 ausgebildete Gewindedurchzug 37 weist ein M10-Innengewinde auf und ist somit grösser als der am ersten, krümmungsseitig innenliegenden Wandabschnitt 15 des Schellenbügels 12 angeordnete Gewindedurchzug 38 ausgebildet, der ein M8-Innengewinde aufweist.

In der Fig. 5 ist ein zweites Ausführungsbeispiel eines erfindungsgemässen Schellenbügels 52 dargestellt. Der Schellenbügel 52 weist eine Krümmung, einen ersten, krümmungsseitig innenliegenden Wandabschnitt 55, einen dem ersten Wandabschnitt 55 gegenüberliegenden zweiten Wandabschnitt 56 sowie einen die Wandabschnitte 55 und 56 verbindenden Verbindungsabschnitt 57 auf. Der zweite Wandabschnitt 56 ist entlang des gesamten Verlaufs des Schellenbügels 52 unter Ausbildung eines Innenhohlraums 58 in einem Abstand zu dem ersten Wandabschnitt 55 angeordnet.

An den Wandabschnitten 55 und 56 sind als Befestigungsmittel 66 zwei auf einer gemeinsamen Achse 69 liegende, einander zugewandte Gewindedurchzüge 67 und 68 vorgesehen, wobei der am zweiten, krümmungsseitig aussenliegenden Wandabschnitt 56 ausgebildete Gewindedurchzug 67 grösser als der am ersten, krümmungsseitig innenliegenden Wandabschnitt 55 angeordnete Gewindedurchzug 68 ausgebildet ist.

## Patentansprüche

1. Rohrschelle mit Schellenbügeln (12, 22; 52), die an Endbereichen miteinander verbindbar sind, wobei zumindest ein Schellenbügel (12, 22; 52) eine Krümmung, einen ersten, krümmungsseitig innenliegenden Wandabschnitt (15, 25; 55), einen dem ersten Wandabschnitt (15, 25; 55) gegenüberliegenden zweiten Wandabschnitt (16, 26; 56) sowie einen die Wandabschnitte (15, 16, 25, 26; 55, 56) verbindenden Verbindungsabschnitt (17, 27; 57) aufweist,
wobei der zweite Wandabschnitt (16, 26; 56) entlang des gesamten Verlaufs des Schellenbügels (12, 22; 52) unter Ausbildung eines Innenhohlraums (18, 28; 58) in einem Abstand zu dem ersten Wandabschnitt (15, 25; 55) angeordnet ist,
**dadurch gekennzeichnet, dass**
die Höhe (H1) des Innenhohlraums (18, 28) am Scheitelpunkt (14, 24) der Krümmung am grössten ist, und/oder
dass an zumindest einem der Schellenbügel (12; 52) ein Befestigungsmittel (36) am Scheitelpunkt (14) der Krümmung des Schellenbügels (12) vorgesehen ist.

2. Rohrschelle nach Anspruch 1, **dadurch gekennzeichnet, dass** zumindest ein Schellenbügel (12, 22) aus einem umfänglich geschlossenen, den Innenhohlraum (18, 28) ausbildenden Hohlprofil gefertigt ist.

3. Rohrschelle nach einem der Ansprüche 1 oder 2, **dadurch gekennzeichnet, dass** zumindest ein Schellenbügel (12, 22) nach aussen ragende Flansche (13, 23) aufweist.

4. Rohrschelle nach einem der vorstehenden Ansprüche, **dadurch gekennzeichnet, dass** das Befestigungsmittel (36; 66) ein Gewindedurchzug (37, 38; 67, 68) ist.

5. Rohrschelle nach Anspruch 4, **dadurch gekennzeichnet, dass** das Befestigungsmittel (36; 66) zwei Gewindedurchzüge (37, 38; 67, 68) umfasst, die an den zwei einander gegenüberliegenden Wandabschnitten (15, 16; 55, 56) ausgebildet sind und auf einer gemeinsamen Achse (39, 69) liegen, wobei der eine Gewindedurchzug (37; 67) einen grösseren Innendurchmesser als der andere Gewindedurchzug (38; 68) aufweist.

## Claims

1. Pipe clamp with stirrup pieces (12, 22; 52) connectable to each other in their end regions, wherein at least one stirrup piece (12, 22; 52) is in the form of a bow, and has a first wall portion (15, 25; 55) on the inside of the bow, a second wall portion (16, 26; 56) opposite the first wall portion (15, 25; 55), and a connecting portion (17, 27; 57) joining the wall portions (15, 16, 25, 26; 55, 56),
[and] wherein along the whole extent of the stirrup piece (12, 22; 52) the second wall portion (16, 26; 56) is set at a distance from the first wall portion (95, 25; 55), thus forming an internal cavity (18, 28; 58),
**characterized in that**
the height (H 1) of the internal cavity (18, 28) is greatest at the apex (14, 24) of the bow, and/or
**in that** a fixing means (36) is provided on at least one of the stirrup pieces (12; 52) at the apex (14) of the bow of the stirrup piece (12).

2. Pipe clamp according to Claim 1, **characterized in that** at least one stirrup piece (12, 22) is made from a circumferentially closed hollow section forming the internal cavity (18, 28).

3. Pipe clamp according to either of Claims 1 and 2, **characterized in that** at least one stirrup piece (12, 22) has outwards jutting flanges (13, 23).

4. Pipe clamp according to any one of the preceding claims, **characterized in that** the fixing means (36; 66) is an extruded hole (37, 38; 67, 68).

5. Pipe clamp according to Claim 4, **characterized in that** the fixing means (36; 66) comprises two extruded holes (37, 38; 67, 68) formed on the two opposite wall portions (15, 16; 55, 56) and located on a common axis (39, 69), one extruded hole (37; 67) having a larger internal diameter than the other extruded hole (38; 68).

## Revendications

1. Collier comprenant étriers (12, 22 ; 52) de collier qui peuvent être reliés ensemble à leurs parties d'extrémités, au moins un étrier (12, 22 ; 52) de collier présentant une courbure, une première partie de paroi (15, 25 ; 55) située du côté de la courbure à l'intérieur, une deuxième partie de paroi (16, 26 ; 56) située en face de la première partie de paroi (15, 25 ; 55), ainsi qu'une partie de liaison (17, 27 ; 57) reliant les parties de parois (15, 16, 25, 26 ; 55, 56),
la deuxième partie de paroi (16, 26 ; 56) étant disposée tout le long de l'étrier (12, 22 ; 52) de collier, moyennant la formation d'un espace creux interne (18, 28 ; 58) à une distance de la première partie de paroi (15, 25 ; 55),
**caractérisé en ce que**
la hauteur (H1) de l'espace creux interne (18, 28) est la plus élevée au sommet (14, 24) de la courbure, et/ou
qu'un moyen de fixation (36) est prévu au sommet (14) de la courbure de l'étrier (12) de collier sur au moins un des étriers de collier (12 ; 52).

2. Collier selon la revendication 1, **caractérisé en ce qu'**au moins un étrier (12, 22) de collier est fabriqué par un profil creux formant un espace creux interne (18, 28) , en faisant le tour, fermé.

3. Collier selon l'une des revendications 1 ou 2, **caractérisé en ce qu'**au moins un étrier (12, 22) de collier présente une bride (13, 23) dépassant vers l'extérieur.

4. Collier selon l'une des revendications précédentes, **caractérisé en ce que** le moyen de fixation (36 ; 66) est une agrafe de support (37, 38 ; 67, 68).

5. Collier selon la revendication 4, **caractérisé en ce que** le moyen de fixation (36 ; 66) comporte deux agrafes de support (37, 38 ; 67, 68) qui sont conçues sur les deux parties de parois (15, 16 ; 55, 56) situées l'une en face de l'autre et se situent sur une axe (39, 69) commun, l'une des agrafes de support (37 ; 67) présentant un diamètre interne plus grand que l'autre agrafe de support (38 ; 68).
